# EUROPÄISCHE PATENTSCHRIFT

(11) **EP 2 569 515 B1**
(45) Veröffentlichungstag und Bekanntmachung des Hinweises auf die Patenterteilung: **25.11.2015**
(21) Anmeldenummer: 11718025.7
(22) Anmeldetag: 29.04.2011
(51) Int. Cl.: F01D 17/16, F02C 6/12, F02C 9/22, F16B 17/00

(54) **LADEEINRICHTUNG MIT EINER ANSCHLAGVORRICHTUNG**
TURBOCHARGER WITH LIMIT STOP DEVICE
TURBOCHARGEUR AVEC DISPOSITIF DE BUTEE

(30) Priorität: 11.05.2010 DE 102010020026
(43) Veröffentlichungstag der Anmeldung: 20.03.2013
(73) Patentinhaber: Bosch Mahle Turbo Systems GmbH & Co. KG, 70376 Stuttgart (DE)
(72) Erfinder: AMMON, Volkhard, 72124 Pliezhausen (DE)
(74) Vertreter: BRP Renaud & Partner mbB Rechtsanwälte Patentanwälte Steuerberater
(86) Internationale Anmeldenummer: PCT/EP2011/056875
(87) Internationale Veröffentlichungsnummer: WO 2011/141302

(56) Entgegenhaltungen:
- WO-A1-2009/102546
- DE-A1- 19 637 015
- DE-U1- 8 711 918
- GB-A- 274 954
- GB-A- 2 280 231
- US-A- 3 560 030
- US-A- 5 599 147
- US-A- 5 905 771

## Beschreibung

Die vorliegende Erfindung betrifft eine Ladeeinrichtung, insbesondere einen Abgasturbolader, mit wenigstens einer Anschlagvorrichtung zum Begrenzen eines Verstellwegs eines mobilen Bauteils relativ zu einem stationären Bauteil.

In vielen Bereichen der Technik kann es erforderlich sein, den Verstellweg eines mobilen Bauteils relativ zu einem stationären Bauteil zu begrenzen, um eine vorbestimmte Relativlage oder Endlage am Ende des Verstellwegs definieren zu können. Erreicht wird dies in der Regel mit einem Anschlag. Ein derartiger Anschlag kann beispielsweise mit Hilfe einer Anschlagvorrichtung der eingangs genannten Art realisiert werden.

Um Herstellungstoleranzen ausgleichen zu können, ist es erwünscht, die jeweilige Endlage erst gegen Ende der Montage durch den jeweiligen Anschlag zu definieren. Hierzu kann eine derartige Anschlagvorrichtung einstellbar ausgestaltet sein.

Beispielsweise kann es bei einem Abgasturbolader mit variabler Turbinengeometrie erforderlich sein, den Verstellweg eines Stellglieds zum Betätigen der variablen Turbinengeometrie zu begrenzen, um eine Offenstellung bzw. eine Schließstellung der variablen Turbinengeometrie zu definieren.

Aus der DE 10 2004 058 719 A1 ist ein Abgasturbolader mit variabler Turbinengeometrie bekannt, an dessen Turbinengehäuse eine Konsole befestigt ist, die einen Stellantrieb zum Betätigen eines Stellglieds der variablen Turbinengeometrie trägt. Das Stellglied ist ein verschwenkbarer Hebel, dessen Verstellweg in einer Schwenkrichtung durch einen Anschlag begrenzt ist. Dieser Anschlag ist durch die axiale Stirnseite eines Gewindestifts gebildet, der in eine Gewindebohrung eingesetzt ist, die an der Konsole ausgebildet ist. Durch Verdrehen des Gewindestifts kann die Position des Axialanschlags justiert werden.

Ein Abgasturbolader gemäß dem Stand der Technik ist aus WO2009/102546 bekannt.

Die vorliegende Erfindung beschäftigt sich mit dem Problem, für eine Anschlagvorrichtung der eingangs genannten Art bzw. für eine damit ausgestattete Ladeeinrichtung eine verbesserte Ausführungsform anzugeben, die sich insbesondere durch eine einfache Einstellbarkeit bzw. Montierbarkeit auszeichnet.

Dieses Problem wird durch die Gegenstände der unabhängigen Ansprüche 1 gelöst. Vorteilhafte Ausführungsformen sind Gegenstand der abhängigen Ansprüche.

Die Erfindung beruht auf dem allgemeinen Gedanken, die Anschlagvorrichtung mit Hilfe eines Hülsenkörpers und eines Kernkörpers zu realisieren, wobei der Hülsenkörper in eine im stationären Bauteil ausgebildete Öffnung einsteckbar ist, während der Kernkörper im Inneren des Hülsenkörpers angeordnet ist und den Hülsenkörper radial mit dem stationären Bauteil verspannt. Durch diese Verspannung erfolgt dann die axiale und/oder drehfeste Fixierung des Hülsenkörper am stationären Bauteil. Des Weiteren ist die Anschlagvorrichtung mit einer Anschlagfläche ausgestattet, die in den Verstellweg des mobilen Bauteils hineinragt und dessen Verstellweg begrenzt. Es hat sich gezeigt, dass der Hülsenkörper in der Öffnung des stationären Bauteils vergleichsweise einfach und präzise positioniert werden kann, um den Anschlag zu justieren. Die radiale Verspannung kann mit Hilfe des Kernkörpers vergleichsweise einfach so realisiert werden, dass dabei keine Lageänderung zwischen Hülsenkörper und stationärem Bauteil mehr auftritt. Somit ergibt sich eine vergleichsweise einfache Montierbarkeit bei einfacher Einstellbarkeit des Anschlags.

Von besonderem Vorteil ist dabei die Festlegung des Hülsenkörpers am stationären Bauteil ausschließlich durch die Verspannung, die mit Hilfe des Kernkörpers realisiert wird. Zusätzliche Befestigungsmaßnahmen zur Fixierung des Hülsenkörpers am stationären Bauteil können somit entfallen.

Entsprechend einer vorteilhaften Ausführungsform kann der Kernkörper im montierten Zustand durch die radiale Verspannung mit dem Hülsenkörper in diesem axial und/oder drehfest fixiert sein. Mit anderen Worten, die Festlegung des Kernkörpers am Hülsenkörper erfolgt ebenfalls ausschließlich durch die Verspannung. Somit können auch hier weitere Befestigungsmaßnahmen zum Fixieren des Kernkörpers am Hülsenkörper entfallen. Die Montage gestaltet sich dadurch besonders einfach und preiswert.

Die Anschlagfläche kann bei einer bevorzugten Ausführungsform am Hülsenkörper ausgebildet sein. Alternativ ist es ebenso möglich, die Anschlagfläche am Kernkörper auszubilden. Bei einer weiteren Alternativen kann zusätzlich zum Hülsenkörper und zum Kernkörper ein Anschlagkörper vorgesehen sein, der die Anschlagfläche aufweist und der am Hülsenkörper oder am Kernkörper angeordnet, also daran angebaut ist. Hierdurch kann abhängig von der jeweiligen Anwendung eine geeignete Anschlagfläche bereitgestellt werden.

Gemäß einer anderen Ausführungsform kann der Hülsenkörper im Halteabschnitt einen Innenkonus aufweisen, der mit einem Außenkonus des Kernkörpers zum radialen Verspannen zusammenwirkt. Bei dieser Ausführungsform kann die radiale Verspannung zwischen Hülsenkörper und stationärem Bauteil einerseits und zwischen Kernkörper und Hülsenkörper andererseits besonders einfach realisiert werden, indem eine axiale Verstellung bzw. axiale Verstellkraft zwischen Kernkörper und Hülsenkörper erzeugt wird, bei welcher die beiden Konusse ineinander gedrückt werden. Durch das axiale Ineinanderdrücken der beiden Konusse wird der Hülsenkörper radial geweitet, wodurch es zur radialen Verspannung mit dem stationären Bauteil kommt.

Zweckmäßig können die Konuswinkel des Innenkonus und des Außenkonus gleich groß gewählt sein, um eine flächige Kraftübertragung zu realisieren. Zusätzlich oder alternativ kann vorgesehen sein, die Konuswinkel der beiden Konusse so zu wählen, dass sich eine Selbsthemmung einstellt, so dass die radiale Verspannung zwischen den beiden Konussen in axialer Richtung keine Kraftkomponente besitzt, die ausreichend groß ist, um die beiden Konusse wieder auseinander zu treiben. Diese Selbsthemmung kann durch eine entsprechende Oberflächengestaltung zumindest eines der beiden Konusse unterstützt bzw. unabhängig von den Konuswinkeln realisiert werden. Beispielsweise kann zumindest einer der beiden Konusse eine reibungserhöhte Oberfläche aufweisen, was beispielsweise durch eine entsprechende Rauhigkeit oder durch eine entsprechende Haftbeschichtung oder dergleichen realisierbar ist. Insbesondere ist auch denkbar, eine reibungserhöhende Hülse oder Folie, zum Beispiel in Trichterform, zwischen den beiden Konussen anzuordnen. Ebenso ist die Anordnung einer reibungserhöhenden Schicht denkbar, bei der es sich beispielsweise um eine Chemisch-Nickel-Matrix mit darin eingelagerten Siliziumcarbid-Partikeln handeln kann.

Bei einer anderen Ausführungsform kann der Hülsenkörper im Halteabschnitt einen sich axial verjüngenden Innenquerschnitt aufweisen, während der Kernkörper einen dazu konvex gewölbten Außenquerschnitt besitzt. Beispielsweise kann der Innenquerschnitt als Innenkonus ausgestaltet sein, während der Außenquerschnitt ballig oder kugelförmig ausgestaltet sein kann. Durch axiales Einpressen oder Eindrücken des Kernkörpers in den sich verjüngenden Bereich des Hülsenkörpers kommt es zur gewünschten radialen Verspannung. Bei einer besonders vorteilhaften Ausführungsform kann der Kernkörper als Kugel ausgestaltet sein.

Montagefehler lassen sich dadurch vermeiden. Ferner können Kugeln besonders preiswert hergestellt werden.

Bei einer anderen Ausführungsform kann der Hülsenkörper im Halteabschnitt an seiner Außenseite zumindest einen radial abstehenden Vorsprung aufweisen. Durch die radiale Verspannung kann dieser wenigstens eine Vorsprung in eine die Öffnung einfassende Innenwand des stationären Bauteils eindringen, wodurch sich eine formschlüssige Fixierung zwischen Hülsenkörper und stationärem Bauteil ausbildet. Der jeweilige Vorsprung kann sich beispielsweise ringförmig umlaufend erstrecken, was die Axialsicherung verbessert. Ebenso ist denkbar, den jeweiligen Vorsprung mit einer axialen Erstreckung auszustatten, was die Drehsicherung verbessert. Zweckmäßig sind mehrere Vorsprünge vorgesehen, die sich axial aneinander reihen oder in Umfangsrichtung nebeneinander angeordnet sind. Ebenso ist eine gerändelte Außenkontur für den Hülsenkörper im Halteabschnitt denkbar, die im Wesentlichen durch eine Vielzahl ringförmiger, axial nebeneinander angeordneter Vorsprünge gebildet ist, die durch eine Vielzahl geradliniger, in Umfangsrichtung nebeneinander angeordneter Vorsprünge überlagert ist.

Alternativ ist auch hier denkbar, den Hülsenkörper an seiner Außenseite zumindest im Halteabschnitt mit einer erhöhten Rauhigkeit auszustatten, was durch eine entsprechende Reibungsbeschichtung oder Oberflächenbearbeitung realisierbar ist. Auch hier ist denkbar, eine reibungserhöhende Hülse oder Folie zwischen dem Hülsenkörper und dem stationären Bauteil anzuordnen. In diesem Fall besitzt der Hülsenkörper im Halteabschnitt an seiner Außenseite zumindest eine reibungserhöhende Schicht, die beispielsweise mit Hilfe von Siliziumcarbid-Partikeln hergestellt werden kann, die hierzu in eine Chemisch-Nickel-Matrix eingebunden sind.

Bei einer speziellen Ausführungsform kann der Kernkörper zumindest für die Montage eine Zugstange aufweisen, die bei der Montage aus der Öffnung heraussteht, so dass bei axial und/oder bezüglich seiner Drehlage positioniertem Hülsenkörper über diese Zugstange axiale Kräfte in den Kernkörper einleitbar sind, um die radiale Verspannung zu erzeugen. Über diese Zugstange ist der Kernkörper, der im Inneren des Hülsenkörpers angeordnet ist, leicht zugänglich, um die für die Erzeugung der radialen Verspannung erforderliche Axialbewegung bzw. Axialkraft einleiten zu können.

Alternativ kann der Hülsenkörper zumindest für die Montage einen Zughülsenabschnitt aufweisen, der bei der Montage aus der Öffnung heraussteht, so dass bei axial und/oder bezüglich seiner Drehlage positioniertem Hülsenkörper über diesen Zughülsenabschnitt axiale Zugkräfte in den Hülsenkörper einleitbar sind. Gleichzeitig sind zur Erzeugung der radialen Verspannung durch den Zughülsenabschnitt hindurch axiale Druckkräfte auf den Kernkörper einleitbar. Auch bei dieser Bauweise wird die axiale Verstellbarkeit bzw. Krafteinleitung zwischen Hülsenkörper und Kernkörper vereinfacht, um die gewünschte radiale Verspannung erzeugen zu können.

Zweckmäßig kann nun die Zugstange am Kernkörper so angebracht sein, dass sie aufgrund der axialen Zugkräfte abbricht, sobald die gewünschte radiale Verspannung erreicht ist. Analog dazu kann der Zughülsenabschnitt am Hülsenkörper so angebracht sein, dass er aufgrund der axialen Zugkräfte abbricht, sobald die gewünschte radiale Verspannung erreicht ist. Durch diese Bauweise vereinfacht sich die Montage, da keine Kraftmessungen oder dergleichen durchgeführt werden müssen, um das Erreichen des fertig montierten Zustands erkennen zu können. Vereinfacht ausgedrückt wird bei der hier vorgestellten Anschlagvorrichtung an der jeweiligen Zugstange bzw. am jeweiligen Zughülsenabschnitt solange gezogen, bis er abbricht. Damit ist der Montagevorgang beendet. Die Auslegung der jeweiligen Sollbruchstelle gewährleistet, dass eine für die gewünschte Fixierung zwischen Hülsenkörper und stationärem Bauteil einerseits sowie zwischen Kernkörper und Hülsenkörper andererseits erforderliche Mindestverspannung erreicht wird.

Vorzugsweise kann der Hülsenkörper selbst einen Anschlagabschnitt aufweisen, der im montierten Zustand aus der Öffnung herausragt und der die Anschlagfläche aufweist. Mit anderen Worten, der jeweilige Anschlag ist dann am Hülsenkörper ausgebildet. Diese Bauform lässt sich vergleichsweise einfach realisieren und benötigt nur zwei Bauteile, nämlich den Hülsenkörper und den Kernkörper. Zweckmäßig kann die Anschlagfläche durch eine ringförmige axiale Stirnseite des Anschlagabschnitts oder durch ein geschlossenes axiales Ende des Anschlagabschnitts gebildet sein. Bei dieser Ausführungsform handelt es sich somit um einen Axialanschlag, bei dem das mobile Bauteil axial gegen die Anschlagfläche fährt. Alternativ ist es ebenso möglich, die Anschlagfläche am Hülsenkörper durch eine radiale Umfangsseite des Anschlagabschnitts zu bilden. Bei dieser Ausführungsform wird ein radialer Anschlag erzeugt, bei dem das mobile Bauteil radial gegen die Anschlagfläche fährt. Besonders vorteilhaft kann dabei eine Ausführungsform sein, bei welcher der Anschlagabschnitt des Hülsenkörpers exzentrisch ausgestaltet ist. Durch die Exzentrizität des Anschlagabschnitts ist es für die Justierung des Radialanschlags möglich, den Hülsenkörper vor der Verspannung in der Öffnung relativ zum stationären Bauteil zu drehen. Durch diese Drehung verändert sich aufgrund der Exzentrizität des Anschlagabschnitts die radiale Position eines auf den Verstellweg ausgerichteten Abschnitts der die Anschlagfläche bildenden außenliegenden Umfangsseite des Anschlagabschnitts. Somit kann durch Drehen des Hülsenkörpers die radiale Position des Radialanschlags justiert werden. Durch die Verspannung mit Hilfe des Kernkörpers kann die justierte Position des Hülsenkörpers dann fixiert werden.

Bei einer anderen vorteilhaften Ausführungsform kann die Anschlagfläche an einem Anschlagkörper ausgebildet sein, der am Hülsenkörper angeordnet ist, also daran angebaut ist, und zwar vorzugsweise an einem aus der Öffnung herausstehenden Anschlagabschnitt des Hülsenkörpers. Alternativ kann die Anschlagfläche auch an einem aus der Öffnung herausstehenden Anschlagabschnitt des Kernkörpers ausgebildet sein.

Abhängig von der jeweiligen Einbausituation kann die Zugstange bzw. der Zughülsenabschnitt an der gleichen Seite aus der Öffnung herausragen, an der sich auch die Anschlagfläche befindet. In diesem Fall kann die Öffnung als Durchgangsöffnung oder als einseitig verschlossene Öffnung ausgestaltet sein. Ebenso ist eine Bauform denkbar, bei welcher die Zugstange bzw. der Zughülsenabschnitt an einer von der Anschlagfläche abgewandten Seite aus der Öffnung herausragen. In diesem Fall muss die Öffnung als Durchgangsöffnung ausgestaltet sein.

Gemäß einer anderen Ausführungsform kann der Hülsenkörper einen radial abstehenden Kragenabschnitt aufweisen, der axial an einer die Öffnung berandenden Einfassung des stationären Bauteils abgestützt ist. In diesem Fall kann der Kernkörper in der Einsteckrichtung des Hülsenkörpers axial in den Hülsenkörper eingedrückt oder eingeschlagen werden, um die gewünschte radiale Verspannung zu erzeugen. Bei dieser Ausführungsform wird die axiale Positionierung des Hülsenkörpers relativ zum stationären Bauteil durch den Kragenabschnitt definiert. Diese Ausführungsform eignet sich daher in besonderer Weise zur Realisierung eines Radialanschlags, wobei die zugehörige Anschlagsfläche dann zweckmäßig im Bereich des Kragenabschnitts am Hülsenkörper ausgebildet ist. Durch einen bezüglich des Hülsenkörpers exzentrisch geformten bzw. angeordneten Kragenabschnitt kann durch die Drehlage des Hülsenköpers in der Öffnung vor dem Einbringen des Kernkörpers die gewünschte radiale Positionierung des Radialabschnitts realisiert werden. Diese Ausführungsform zeichnet sich durch eine besonders einfache Montierbarkeit aus.

Bei einer besonders vorteilhaften Anwendung der hier vorgestellten Anschlagvorrichtung, für die auch separat Schutz beansprucht wird bzw. die auch eine separate erfindungsgemäße Lösung repräsentiert, kann die Anschlagvorrichtung in einer Ladeeinrichtung, insbesondere in einem Abgasturbolader, verwendet werden, der eine variable Turbinengeometrie besitzt. Die variable Turbinengeometrie umfasst turbinenseitig mehrere Leitschaufeln, die gemeinsam verdrehbar sind, um eine Zulauföffnung zu einem Turbinenrad hinsichtlich ihres Querschnitts variieren zu können. Für die Betätigung der variablen Turbinengeometrie kann ein Stellglied vorgesehen sein, das sich üblicherweise an einer Außenseite des Türbinengehäuses befindet und mit Hilfe einer Stelleinrichtung angetrieben werden kann. Zur Begrenzung des Verstellwegs des Stellglieds kann nun eine Anschlagvorrichtung der vorbeschriebenen Art verwendet werden. Das mobile Bauteil ist dann das Stellglied, während das stationäre Bauteil das Turbinengehäuse oder eine am Turbinengehäuse angeordnete Konsole ist.

Die variable Turbinengeometrie kann im Inneren des Turbinengehäuses einen Betätigungsring aufweisen, der drehend verstellbar ist und mit dem Betätigungsarme der verstellbaren Leitschaufeln gemeinsam verdrehbar sind, wobei eine Verdrehung der Betätigungsarme zu einer entsprechenden Verdrehung der Leitschaufeln führt. Üblicherweise kann dieser Betätigungsring für seine Drehbetätigung mit dem vorstehend genannten Stellglied gekoppelt sein. Um die Verstellbewegung des Betätigungsrings in der einen und/oder in der anderen Drehrichtung zu begrenzen, kann zumindest eine der vorstehend beschriebenen Anschlagvorrichtungen zum Einsatz kommen. Das mobile Bauteil ist dann der Betätigungsring, während das stationäre Bauteil dann ein Leitschaufelträger der variablen Turbinengeometrie ist, an dem die verstellbaren Leitschaufeln drehbar gelagert sind. Insbesondere können bei dieser Anwendung zwei Anschlagvorrichtungen zum Einsatz kommen, um den Betätigungsring sowohl in der einen Drehrichtung als auch in der anderen Drehrichtung zu begrenzen, so dass sowohl für die Offenstellung als auch für die Schließstellung jeweils eine definierte Endlage sichergestellt ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch
- Fig. 1: eine teilweise geschnittene Außenansicht einer Ladeeinrichtung im Bereich eines Stellglieds einer variablen Turbinengeometrie,
- Fig. 2-6: vereinfachte Prinzipdarstellungen im Längsschnitt einer Anschlagvorrichtung bei verschiedenen Ausführungsformen,
- Fig. 7: eine Axialansicht einer variablen Turbinengeometrie in einer Schließstellung,
- Fig. 8: eine Ansicht wie in Fig. 7, jedoch in entgegengesetzter Blickrichtung,
- Fig. 9: eine Ansicht wie in Fig. 7, jedoch in einer Offenstellung,
- Fig. 10: eine Ansicht wie in Fig. 9, jedoch in entgegengesetzter Blickrichtung,
- Fig. 11: eine Ansicht wie in den Fig. 2-6, jedoch bei einer anderen Ausführungsform,
- Fig. 12: eine Ansicht wie in Fig. 11, jedoch bei einer weiteren Ausführungsform.

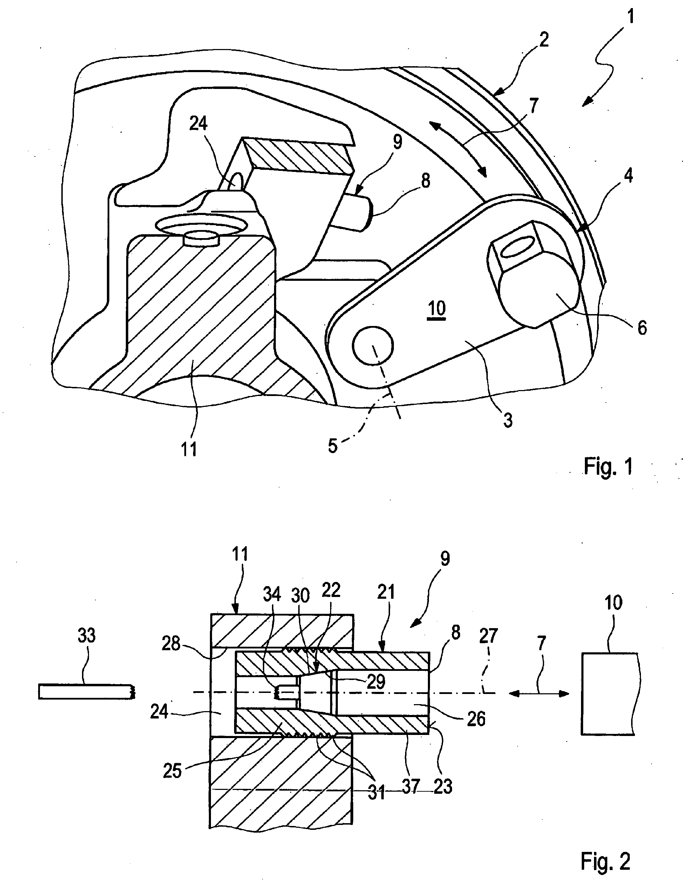

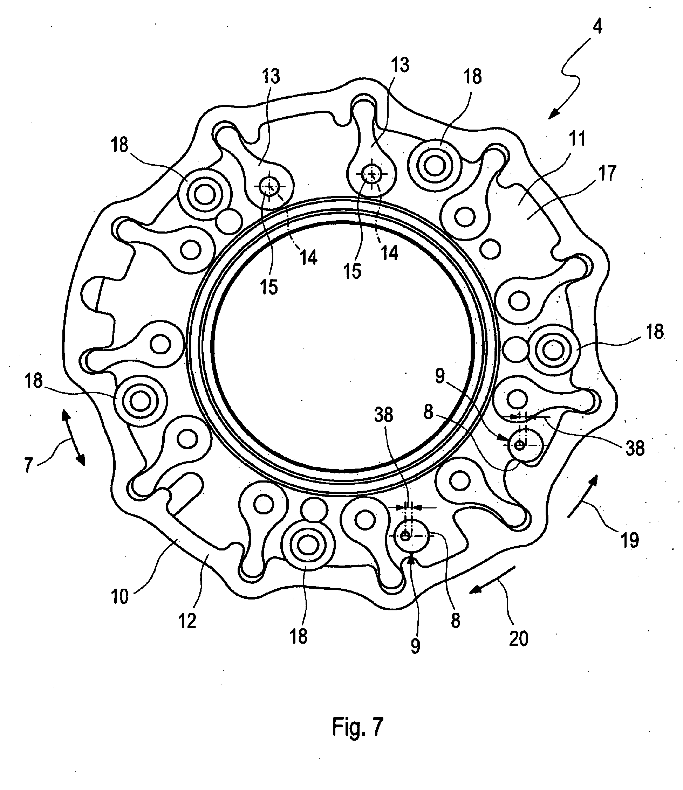

Entsprechend Fig. 1 weist eine Ladeeinrichtung 1, bei der es sich bevorzugt um einen Abgasturbolader handeln kann, ein Turbinengehäuse 2 auf, an dessen Außenseite ein Stellglied 3 einer in den Fig. 7-10 näher gezeigten variablen Turbinengeometrie 4 angeordnet ist. Das Stellglied 3 ist hier als Betätigungshebel ausgestaltet, der um eine Drehachse 5 verschwenkbar am Turbinengehäuse 2 gelagert ist. Für seine Drehbetätigung ist das Stellglied 3 über ein Kopplungselement 6 mit einem hier nicht gezeigten Stellantrieb verbunden.

Bei seiner Betätigung durchfährt das Stellglied 3 einen durch einen Doppelpfeil angedeuteten Verstellweg 7. Dieser ist zumindest in einer Verstellrichtung durch einen Anschlag 8 begrenzt, der mit Hilfe einer Anschlagvorrichtung 9 realisiert ist. Die Anschlagvorrichtung 9 ist hier unmittelbar am Turbinengehäuse 2 angeordnet. Ebenso ist es denkbar, die Anschlagvorrichtung 9 an einer Konsole anzubringen, die ihrerseits am Turbinengehäuse 2 befestigt ist.

Die Anschlagvorrichtung 9 dient allgemein zum Begrenzen eines Verstellwegs 7 eines mobilen Bauteils 10, das im Beispiel der Fig. 1 durch das Stellglied 3 gebildet ist, relativ zu einem stationären Bauteil 11, das im Beispiel der Fig. 1 durch das Turbinengehäuse 2 gebildet ist.

Gemäß den Fig. 7-10 umfasst die variable Turbinengeometrie 4 im Inneren des Turbinengehäuses 2 einen Betätigungsring 12, mit dessen Hilfe gleichzeitig mehrere Betätigungsarme 13 jeweils um eine eigene Schwenkachse 14 verdrehbar sind. Die Betätigungsarme 13 sind über Zapfen 15 drehfest mit jeweils einer Leitschaufel 16 verbunden. Die Leitschaufeln 16 sind über den jeweiligen Zapfen 15 an einem scheibenförmigen Leitschaufelträger 17 drehbar gelagert. Dabei befindet sich der Leitschaufelträger 17 zwischen den Leitschaufeln 16 und den Betätigungsarmen 13. Der Betätigungsring 12 ist bei der hier gezeigten Ausführungsform über Drehlager 18 drehbar am Leitschaufelträger 17 gelagert. Ferner ist der Betätigungsring 12 auf geeignete Weise mit dem Stellglied 3 verbunden, wobei die Kopplung zwischen Stellglied 3 und Betätigungsring 12 hier nicht dargestellt ist.

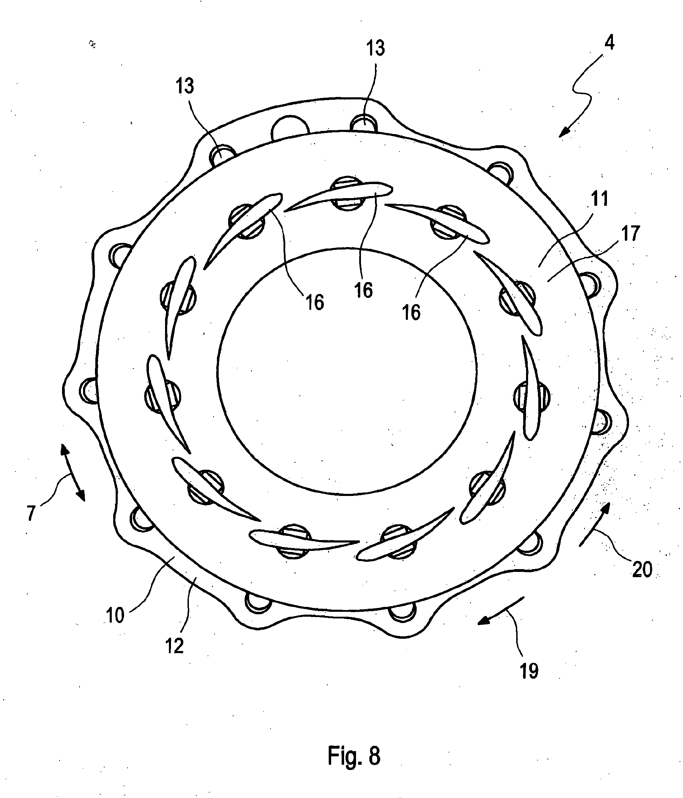

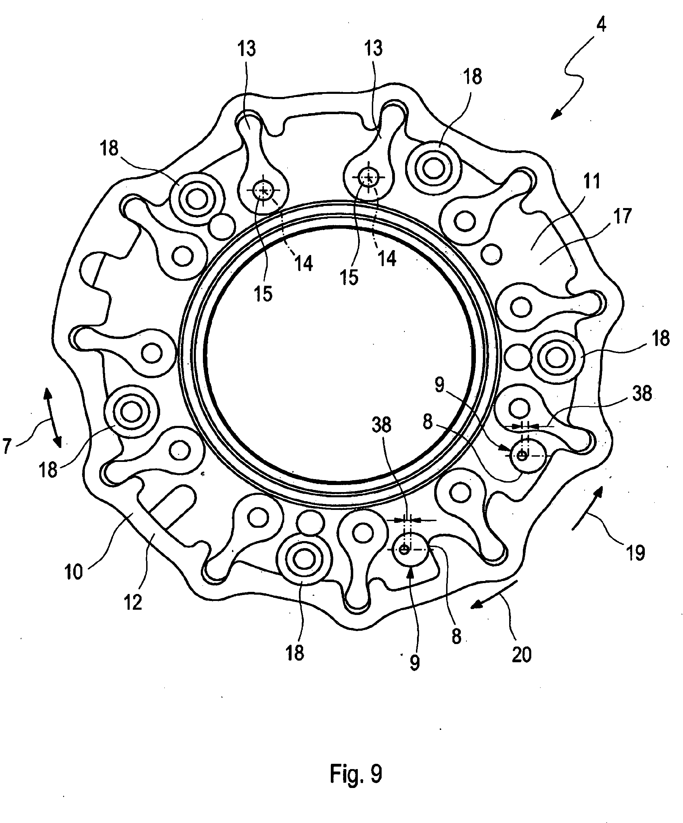

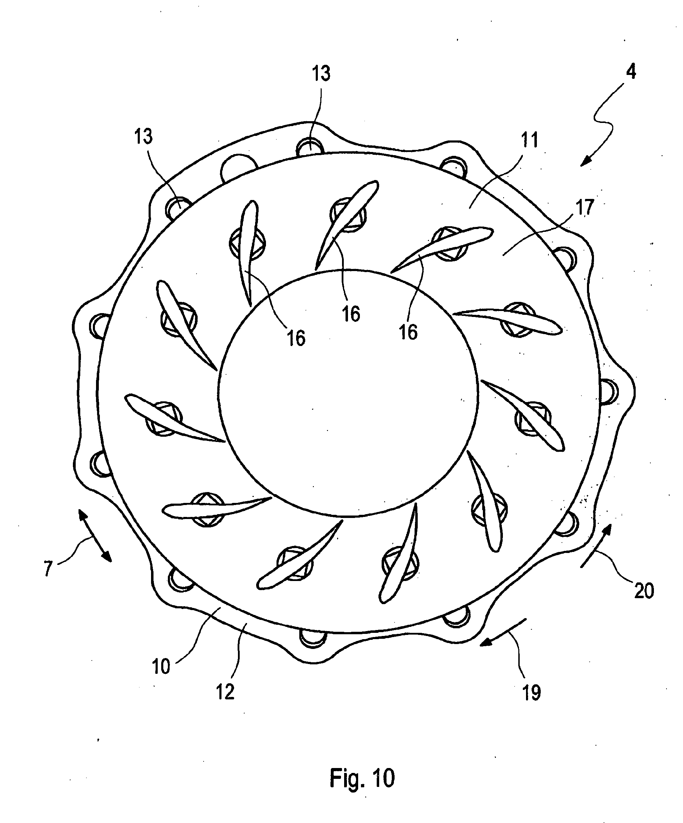

Der Betätigungsring 12 ist somit gegenüber dem Leitschaufelträger 17 verstellbar, wobei ein entsprechender Verstellweg 7 wieder durch einen Doppelpfeil angedeutet ist. Zur Begrenzung dieses Verstellwegs 7 in der einen und/oder in der anderen Drehrichtung kann nun wieder zumindest eine Anschlagvorrichtung 9 vorgesehen sein. Im Beispiel der Fig. 7-10 sind zwei derartige Anschlagvorrichtungen 9 vorgesehen, um den Verstellweg 7 des Betätigungsrings 12 in beiden Drehrichtungen zu begrenzen. Hierdurch kann in der durch einen Pfeil angedeuteten ersten Drehrichtung 19 ein erster Anschlag 8 für eine Schließstellung mit minimalem Durchströmungsquerschnitt zu einem hier nicht dargestellten Turbinenrad der Ladeeinrichtung 1 definiert werden. Diese Schließstellung ist in den Fig. 7 und 8 wiedergegeben. Mit der anderen Anschlagvorrichtung 9 kann in einer ebenfalls durch einen Pfeil angedeuteten, entgegengesetzten zweiten Drehrichtung 20 ein zweiter Anschlag 8 realisiert werden, um eine Offenstellung mit maximalem Durchströmungsquerschnitt zum Turbinenrad zu definieren. Diese Offenstellung ist in den Fig. 9 und 10 wiedergegeben.

Bei der in den Fig. 7-10 gezeigten Ausführungsform bildet der Betätigungsring 12 das mobile Bauteil 10 für die jeweilige Anschlagvorrichtung 9, während der Leitschaufelträger 17 das stationäre Bauteil 11 für die jeweilige Anschtagvorrichtung 9 bildet.

Entsprechend den Fig. 2-6, 11 und 12 umfasst die jeweilige Anschlagvorrichtung 9 einen Hülsenkörper 21, einen Kernkörper 22 sowie eine Anschlagfläche 23. Der Hülsenkörper 21 ist in eine Öffnung 24 eingesteckt, die im stationären Bauteil 11 ausgebildet ist. Dabei ist der Hülsenkörper 21 soweit in die Öffnung 24 eingesteckt, dass ein Halteabschnitt 25 des Hülsenkörpers 21 im Inneren der Öffnung 24 angeordnet ist. Der Hülsenkörper 21 ist hohl ausgebildet und umschließt somit ein Inneres 26. Ferner definiert der Hülsenkörper 21 durch seine Längsmittelachse 27 eine Axialrichtung.

Der Kernkörper 22 ist im Inneren 26 des Hülsenkörpers 21 angeordnet und erzeugt im montierten Zustand eine radiale Verspannung zwischen dem Halteabschnitt 25 des Hülsenkörpers 21 und einer Innenwand 28 des stationären Bauteils 11, welche die Öffnung 24 radial begrenzt. Durch diese Verspannung ist der Hülsenkörper 21 am stationären Bauteil 11 axial und drehfest fixiert.

Die Anschlagfläche 23 bildet den Anschlag 8 und ragt im montierten Zustand in den Verstellweg 7 des mobilen Bauteils 10 hinein und bildet dadurch die gewünschte Begrenzung des Verstellwegs 7.

Der Kernkörper 22 ist im montierten Zustand durch die radiale Verspannung, die auch zwischen dem Kernkörper 22 und dem Halteabschnitt 25 des Hülsenkörpers 21 wirkt, im Hülsenkörper 21 axial und drehfest fixiert.

Zur Realisierung dieser radialen Verspannung besitzt der Hülsenkörper 21 bei den in den Fig. 2-6 und 11 gezeigten Ausführungsformen im Halteabschnitt 25 einen Innenkonus 29. Passend dazu besitzt der Kernkörper 22 einen Außenkonus 30. Zum Erzeugen der radialen Verspannung wirkt der Innenkonus 29 mit dem Außenkonus 30 zusammen. Eine axiale Verstellung bzw. Krafteinleitung zwischen Hülsenkörper 21 und Kernkörper 22 führt aufgrund der Keilwirkung der beiden Konen 29, 30 zur Erzeugung der radialen Verspannung. Zweckmäßig können die Konen 29, 30 so ausgestaltet bzw. aufeinander abgestimmt sein, dass sich eine Selbsthemmung bzw. Selbstklemmung einstellt, spätestens dann, wenn die gewünschte radiale Verspannung erreicht ist. Dies kann durch eine geeignete Auswahl der Konizitäten und/oder durch eine geeignete Abstimmung der Reibungsbeiwerte realisiert werden. Zweckmäßig sind die Konizitäten der beiden Konen 29, 30 gleich groß gewählt, um eine möglichst großflächige Kontaktierung und Kraftübertragung zwischen Kernkörper 22 und Hülsenkörper 21 zu erzielen.

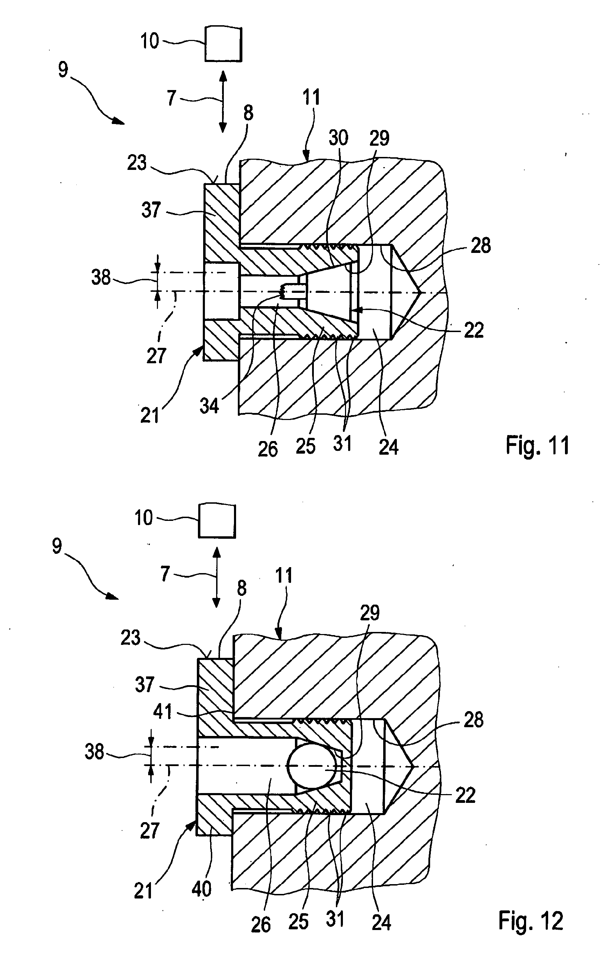

Bei der in Fig. 12 gezeigten Ausführungsform besitzt der Hülsenkörper 21 zur Realisierung der radialen Verspannung im Halteabschnitt 25 einen sich axial, also in Richtung der Längsmittelachse 27 verjüngenden Innenquerschnitt. Im Beispiel ist diese Querschnittsverjüngung wieder durch einen Innenkonus 29 realisiert. Grundsätzlich sind jedoch hier auch andere Verjüngungskonturen, insbesondere gewölbte Konturen, denkbar. Ferner ist bei dieser Ausführungsform der Kernkörper 22 mit einem Außenquerschnitt versehen, der bezüglich des Innenquerschnitts konvex gewölbt ist. Beispielsweise ist die Außenkontur des Kernkörpers 22 in dem den Innenkonus 29 zugewandten Abschnitt zum Hülsenkörper 21 hin ballig oder kugelförmig gewölbt. Fig. 12 zeigt eine besonders vorteilhafte Ausführungsform, bei welcher der Kernkörper 22 als Kugel ausgestaltet ist.

Um die Fixierung des Hülsenkörpers 21 am stationären Bauteil 11 zu verbessern, kann der Hülsenkörper 21 im Halteabschnitt 25 an seiner Außenseite zumindest einen radial abstehenden Vorsprung 31 aufweisen. In den gezeigten Beispielen sind mehrere Vorsprünge 31 vorgesehen, die jeweils in der Umfangsrichtung ringförmig umlaufen. Darüber hinaus sind die Vorsprünge 31 axial zueinander benachbart angeordnet. Die Vorsprünge 31 graben sich bzw. dringen beim Erzeugen der radialen Verspannung in die Innenwand 28 ein und erzeugen dadurch eine formschlüssige Kopplung in der Axialrichtung. Jedenfalls erhöhen sie die Reibung zwischen Hülsenkörper 21 und stationärem Bauteil 11.

Zusätzlich oder alternativ kann auch ein geradliniger Vorsprung 31 vorgesehen sein, der sich insbesondere axial erstrecken kann. Ebenso können mehrere derartige, sich geradlinig bzw. axial erstreckende Vorsprünge 31 vorgesehen sein, die in der Umfangsrichtung benachbart zueinander angeordnet sind. Zusätzlich oder alternativ ist es ebenso möglich, die Außenseite des Hülsenkörper 21 im Halteabschnitt 25 gerändelt auszuführen.

Alternativ zu derartigen Vorsprüngen 31 kann der Hülsenkörper 21 im Halteabschnitt 25 an seiner Außenseite eine reibungserhöhende Schicht aufweisen, die hier ebenfalls mit 31 bezeichnet ist. Eine derartige reibungserhöhende Schicht 31 kann beispielsweise mittels Siliziumcarbid-Partikeln hergestellt werden, die hierzu in einer Chemisch-Nickel-Martix eingebunden sind. Eine derartige reibungserhöhende Beschichtung 31 lässt sich besonders einfach auftragen.

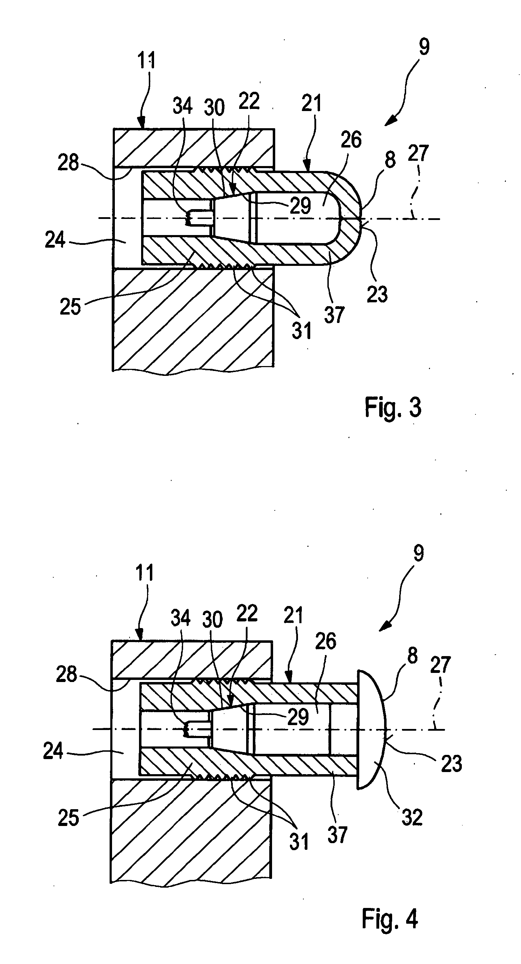

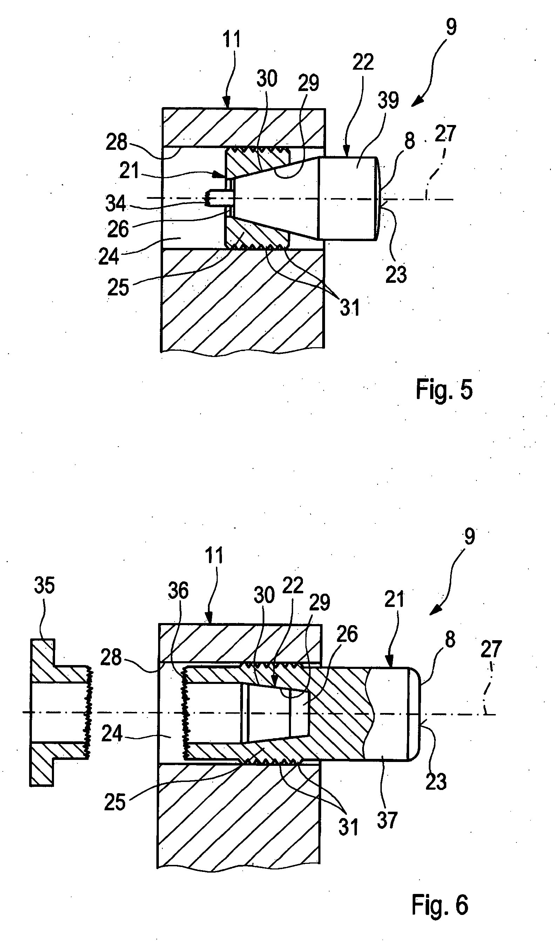

Bei den in den Fig. 2, 3, 6, 11 und 12 gezeigten Ausführungsformen ist die Anschlagfläche 23 direkt am Hülsenkörper 21 ausgebildet. Bei der in Fig. 5 gezeigten Ausführungsform ist die Anschlagfläche 23 exemplarisch am Kernkörper 22 ausgebildet. Bei der in Fig. 4 gezeigten Ausführungsform ist zusätzlich zum Hülsenkörper 21 und zum Kernkörper 22 ein Anschlagkörper 32 vorgesehen, an dem die Anschlagfläche 23 ausgebildet ist. Im Beispiel der Fig. 4 ist der Anschlagkörper 32 am Hülsenkörper 21 angeordnet. Bei einer anderen Ausführungsform kann der Anschlagkörper 32 auch am Kernkörper 22 angeordnet sein.

Exemplarisch für die Ausführungsformen der Fig. 2-5 und 11 zeigt Fig. 2 eine Zugstange 33, die sich für die Montage am Kernkörper 22 befindet. Insbesondere sind Kernkörper 22 und Zugstange 33 aus einem Stück integral hergestellt. Bei der Montage steht diese Zugstange 33 aus der Öffnung 24 heraus. Bei axial und/oder bezüglich seiner Drehlage relativ zum stationären Bauteil 11 positioniertem Hülsenkörper 22 kann über die Zugstange 33 eine axiale Zugkraft in den Kernkörper 22 eingeleitet werden, um die radiale Verspannung zwischen Kernkörper 22 und Hülsenkörper 21 einerseits und zwischen Hülsenkörper 21 und stationärem Bauteil 11 andererseits zu erzeugen. Zweckmäßig ist dabei die Zugstange 33 am Kernkörper 22 so angebracht, dass sie aufgrund der vorstehend genannten axialen Zugkräfte abbricht, sobald die gewünschte radiale Verspannung erreicht ist. Erkennbar ist in den Fig. 2-5 und 11 eine Bruchstelle 34, über welche die Zugstange 33 mit dem Kernkörper 22 verbunden war.

Fig. 6 zeigt eine alternative Ausführungsform, bei welcher der Hülsenkörper 22 zumindest für die Montage einen Zughülsenabschnitt 35 aufweist. Bei der Montage steht dieser Zughülsenabschnitt 35 aus der Öffnung 24 heraus. Bei axial und/oder bezüglich seiner Drehlage relativ zum stationären Bauteil 11 positioniertem Hülsenkörper 22 können nun über den Zughülsenabschnitt 35 axiale Zugkräfte in den Hülsenkörper 22 eingeleitet werden, um axiale Druckkräfte, die auf den Kernkörper 22 durch den Zughülsenabschnitt 35 hindurch eingeleitet werden, abzustützen. Auf diese Weise kann die gewünschte radiale Verspannung erzeugt werden. Auch hier kann zweckmäßig vorgesehen sein, dass der Zughülsenäbschnitt 35 am Hülsenkörper 22 so angebracht ist, dass er aufgrund der axialen Zugkräfte abbricht, sobald die gewünschte radiale Verspannung erreicht ist. Auch hier deutet eine Bruchstelle 36 die zerstörte Verbindung zwischen dem Zughülsenabschnitt 35 und dem übrigen Hülsenkörper 22 an.

Fig. 12 zeigt eine Ausführungsform, die ohne abtrennbare Zugstange 33 bzw. ohne abtrennbaren Zughülsenabschnitt 35 auskommt. Bei dieser Ausführungsform wird die axiale Positionierung des Hülsenkörpers 21 relativ zum stationären Bauteil 11 mit Hilfe eines Kragenabschnitts 40 realisiert, der am Hülsenkörper 21 radial absteht. Ferner ist dieser Kragenabschnitt 40 bei vollständig in die Öffnung 24 eingestecktem Hülsenkörper 21 axial an einer Einfassung 41 abgestützt, welche die Öffnung 24 berandet. Die Einfassung 41 bildet somit einen Bestandteil des stationären Bauteils 11 und geht in die Innenwand 28 über. Bei dieser Ausführungsform ist die Anschlagfläche 23 zur Realisierung des Anschlags 8 an der radialen Umfangsseite des Hülsenkörpers 21 angeordnet, so dass hier ein Radialanschlag verwirklicht wird. Die Anschlagfläche 23 kann hierzu wieder an einem aus der Öffnung 24 vorstehenden Anschlagabschnitt 37 des Hülsenkörpers 21 ausgebildet sein. Im vorliegenden Fall fallen der Kragenabschnitt 40 und der Anschlagabschnitt 37 zusammen, so dass letztlich der Halteabschnitt 37 gleichzeitig den Kragenabschnitt 40 bildet und umgekehrt. Durch eine mit Bezug auf Fig. 11 näher erläuterte Exzentrizität 38 zwischen dem Hülsenkörper 21 und dem Anschlagabschnitt 37 bzw. dem Kragenabschnitt 40 ist durch Verdrehen des Hülsenkörpers 21, das vor dem Verspannen des Hülsenkörpers 21 mit dem stationären Bauteil 11 stattfindet, die radiale Positionierung der Anschlagfläche 23 durchführbar. Sobald die gewünschte radiale Positionierung der Anschlagfläche 23 durchgeführt ist, kann die radiale Verspannung zum Fixieren der Drehlage zwischen Hülsenkörper 21 und stationären Bauteil 11 erzeugt werden. Hierzu wird der Kern körper 22, also hier die Kugel, in der Einsteckrichtung des Hülsenkörpers 21, also in der Richtung, in weicher der Hülsenkörper 21 in die Öffnung 24 eingesteckt wird, die parallel zur Längsmittelachse 27 verläuft, in den Hülsenkörper 21 eingedrückt oder eingeschlagen. Durch die miteinander zusammenwirkenden Querschnitte, also hier der Innenkonus 29 und die Kugeloberfläche kommt es zu gewünschten radialen Verspannung, die den Hülsenkörper 21 gegen Verdrehung und auch axial am stationären Bauteil 11 sichert.

Besonders vorteilhaft ist bei dieser Ausführungsform, dass der Hülsenkörper 21 und der Kernkörper 22 von der gleichen Seite her am stationären Bauteil 11 montierbar sind und dass sich der Hülsenkörper 21 beim Einpressen des Kernkörpers 22 axial über den Kragenabschnitt 40 am stationären Bauteil 11 abstützt, wodurch eine Zugstange 33 bzw. ein Zughülsenabschnitt 35 zum Aufbringen der Reaktionskräfte entbehrlich ist.

Bei den in den Fig. 2-6 gezeigten Ausführungsformen ist die Öffnung 24 als Durchgangsöffnung ausgestaltet. Hierdurch ist es möglich, die Zugstange 33 bzw. den Zughülsenabschnitt 35 an einer von der Anschlagfläche 23 abgewandten Seite aus der Öffnung 24 vorstehen zu lassen, um die Montage zu realisieren. Im Unterschied dazu zeigen die Fig. 11 und 12 je eine Ausführungsform, bei welcher die Öffnung 24 einseitig verschlossen ist. In diesem Fall befinden sich während der Montage die Zugstange 33 (soweit vorhanden) und die Anschlagfläche 23 an der gleichen Seite.

Bei den Ausführungsformen der Fig. 2, 3, 11 und 12 weist der Hülsenkörper 21 jeweils einen Anschlagabschnitt 37 auf, der im montierten Zustand aus der Öffnung 24 herausragt und der die Anschlagfläche 23 aufweist. Bei der in Fig. 2 gezeigten Ausführungsform ist die Anschlagfläche 23 durch eine ringförmige axiale Stirnseite des Anschlagabschnitts 37 gebildet. Bei der in Fig. 3 gezeigten Ausführungsform ist, zum Beispiel durch Umformung, der Hülsenkörper 21 im Bereich des Anschlagabschnitts 37 nach dem Einführen des Kernkörpers 22 mit einem geschlossenen axialen Ende versehen. In diesem Fall ist die Anschlagfläche 23 durch das geschlossene axiale Ende des Anschlagabschnitts 37 gebildet. Bei den in den Fig. 11 und 12 gezeigten Ausführungsformen ist die Anschlagfläche 23 durch eine radiale Umfangsseite des Anschlagabschnitts 37 gebildet. Erkennbar ist dieser Anschlagabschnitt 37 bei der in den Fig. 11 und 12 gezeigten Ausführungsformen bezüglich der Längsmittelachse 27 des Hülsenkörpers 21 exzentrisch gestaltet. Eine entsprechende Exzentrizität ist dabei mit 38 bezeichnet. Die Exzentrizität 38 ist auch in den Fig. 7 und 9 erkennbar. Beispielsweise kann der Anschlagabschnitt 37 im Profil kreisförmig oder elliptisch oder nockenförmig ausgestaltet sein.

Bei der in Fig. 6 gezeigten Ausführungsform kann der Hülsenkörper 21 im Bereich des Anschlagabschnitts 37 massiv bzw. als Vollkörper ausgestaltet sein, da hier aufgrund des Zughülsenabschnitts 35 der Kernkörper 22 an der gegenüberliegenden Seite eingeführt werden kann. Dementsprechend ist auch bei dieser Ausführungsform die Anschlagfläche 23 in einem geschlossenen axialen Ende des Anschlagabschnitts 37 ausgebildet.

Bei der in Fig. 4 gezeigten Ausführungsform ist die Anschlagfläche 23 am Anschlagkörper 32 ausgebildet, der am Hülsenkörper 21, und zwar an dem aus der Öffnung 24 herausstehenden Anschlagabschnitt 37.

Bei der in Fig. 5 gezeigten Ausführungsform ist die Anschlagfläche 23 an einem Anschlagabschnitt 39 des Kernkörpers 22 ausgebildet, der aus der Öffnung 24 heraussteht. In diesem Fall ist der Hülsenkörper 22 vollständig im Inneren der Öffnung 24 angeordnet und besteht im Wesentlichen nur aus seinem Halteäbschnitt 25.

Bei den Ausführungsformen der Fig. 2-6 ist die Anschlagfläche 23 bezüglich der Längsmittelachse 27 axial angeordnet, wodurch hier mit Hilfe der Anschlagvorrichtung 9 jeweils ein Axialanschlag realisiert wird. Im Unterschied dazu ist bei den in den Fig. 11 und 12 gezeigten Ausführungsformen die Anschlagfläche 23 bezüglich der Längsmittelachse 27 radial orientiert, so dass die Anschlagvorrichtung 9 hier einen Radialanschlag realisiert. Durch die bei der in den Fig. 11 und 12 gezeigten Ausführungsform vorgesehene Exzentrizität 38 zwischen dem Anschlagabschnitt 37 und dem übrigen Hülsenkörper 21 kann durch Drehen des Hülsenkörpers 21 eine Justierung des Radialanschlags realisiert werden, da sich beim Verdrehen des Hülsenkörpers 21 relativ zum stationären Bauteil 11 der Abstand des den Anschlag 8 bildenden Bereichs der Anschlagfläche 23 entlang der Umfangsseite relativ zur Längsmittelachse 27 verändert.

Bei den hier gezeigten Ausführungsbeispielen sind das mobile Bauteil 10 und das stationäre Bauteil 11 Bestandteile der Ladeeinrichtung 1. Bei der in Fig. 1 gezeigten Ausführungsform ist das mobile Bauteil 10 durch das Stellglied 3 gebildet, während das stationäre Bauteil 11 durch das Turbinengehäuse 2 bzw. durch eine am Turbinengehäuse 2 befestigte Konsole gebildet ist. Bei der in den Fig. 7-10 gezeigten Ausführungsform ist das mobile Bauteil 10 durch den Betätigungsring 12 gebildet, während das stationäre Bauteil 11 durch den Leitschaufelträger 17 gebildet ist.

## Patentansprüche

1. Ladeeinrichtung, insbesondere Abgasturbolader, mit mindestens einer Anschlagvorrichtung (9) zum Begrenzen eines Verstellwegs (7) eines mobilen Bauteils (10) der Ladeeinrichtung (1) relativ zu einem stationären Bauteil (11) der Ladeeinrichtung (1), wobei die Anschlagvorrichtung (9) eine im montierten Zustand in den Verstellweg (7) des mobilen Bauteils (10) hineinragende Anschlagfläche (23) aufweist, die den Verstellweg (7) des mobilen Bauteils (10) begrenzt, **dadurch gekennzeichnet,**
- **dass** die Anschlagvorrichtung (9) einen Hülsenkörper (21) aufweist, der in eine im stationären Bauteil (11) ausgebildete Öffnung (24) einsteckbar ist, so dass ein Halteabschnitt (25) des Hülsenkörpers (21) im Inneren der Öffnung (24) angeordnet ist,
- **dass** die Anschlagvorrichtung (9) einen Kernkörper (22) aufweist, der im Inneren (26) des Hülsenkörpers (21) angeordnet ist und im montierten Zustand den Halteabschnitt (25) mit einer die Öffnung (24) radial begrenzenden Innenwand (28) des stationären Bauteils (11) radial verspannt und dadurch den Hülsenkörper (21) am stationären Bauteil (11) axial und/oder drehfest fixiert.

2. Ladeeinrichtung nach Anspruch 1,
**dadurch gekennzeichnet,**
**dass** der Kernkörper (22) im montierten Zustand durch die radiale Verspannung mit dem Hülsenkörper (21) in diesem axial und/oder drehfest fixiert ist.

3. Ladeeinrichtung nach Anspruch 1 oder 2,
**dadurch gekennzeichnet,**
**dass** die Anschlagfläche (23) am Hülsenkörper (21) oder am Kernkörper (22) oder an einem Anschlagkörper (32) ausgebildet ist, der am Hülsenkörper (21) oder am Kernkörper (22) angeordnet ist.

4. Ladeeinrichtung nach einem der Ansprüche 1 bis 3,
**dadurch gekennzeichnet,**
**dass** der Hülsenkörper (21) im Halteabschnitt (25) einen Innenkonus (29) aufweist, der mit einem Außenkonus (30) des Kernkörpers (22) zum radialen Verspannen zusammenwirkt.

5. Ladeeinrichtung nach einem der Ansprüche 1 bis 3,
**dadurch gekennzeichnet,**
- **dass** der Hülsenkörper (21) im Halteabschnitt (25) einen sich axial verjüngenden Innenquerschnitt, z. B. einen Innenkonus (29), aufweist, während der Kernkörper (22) einen dazu konvex, z. B. ballig oder kugelförmig, gewölbten Außenquerschnitt aufweist,
- wobei insbesondere vorgesehen sein kann, dass der Kernkörper (22) als Kugel ausgestaltet ist.

6. Ladeeinrichtung nach einem der Ansprüche 1 bis 5,
**dadurch gekennzeichnet,**
- **dass** der Hülsenkörper (21) im Halteabschnitt (25) an seiner Außenseite zumindest einen radial abstehenden Vorsprung (31) oder eine reibungserhöhende Schicht (31) aufweist,
- wobei insbesondere vorgesehen sein kann, dass der jeweilige Vorsprung (31) ringförmig umlaufend oder sich geradlinig und/oder axial erstreckend ausgestaltet ist,
- wobei insbesondere vorgesehen sein kann, dass mehrere Vorsprünge (31) axial und/oder in Umfangsrichtung benachbart angeordnet sind,
- wobei insbesondere vorgesehen sein kann, dass es sich bei der reibungserhöhenden Schicht (31) um eine Chemisch-Nickel-Matrix mit darin eingebetteten Siliziumcarbid-Partikeln handelt.

7. Ladeeinrichtung nach einem der Ansprüche 1 bis 6,
**dadurch gekennzeichnet,**
**dass** der Kernkörper (22) zumindest für die Montage eine Zugstange (33) aufweist, die bei der Montage aus der Öffnung (24) heraussteht, so dass bei axial und/oder bezüglich seiner Drehlage positioniertem Hülsenkörper (21) über die Zugstange (33) axiale Zugkräfte in den Kernkörper (22) einleitbar sind, um die radiale Verspannung zu erzeugen.

8. Ladeeinrichtung nach einem der Ansprüche 1 bis 6,
**dadurch gekennzeichnet,**
**dass** der Hülsenkörper (21) zumindest für die Montage einen Zughülsenabschnitt (35) aufweist, der bei der Montage aus der Öffnung (24) heraussteht, so dass bei axial und/oder bezüglich seiner Drehlage positioniertem Hülsenkörper (21) über den Zughülsenabschnitt (35) axiale Zugkräfte in den Hülsenkörper (21) einleitbar sind, um zur Erzeugung der radialen Verspannung durch den Zughülsenabschnitt (35) hindurch axiale Druckkräfte auf den Kernkörper (22) einleiten zu können.

9. Ladeeinrichtung nach Anspruch 7 oder 8,
**dadurch gekennzeichnet,**
- **dass** die Zugstange (33) am Kernkörper (22) so angebracht ist, dass sie aufgrund der axialen Zugkräfte abbricht, sobald die gewünschte radiale Verspannung erreicht ist, oder
- **dass** der Zughülsenabschnitt (35) am Hülsenkörper (21) so angebracht ist, dass er aufgrund der axialen Zugkräfte abbricht, sobald die gewünschte radiale Verspannung erreicht ist.

10. Ladeeinrichtung nach einem der Ansprüche 1 bis 6,
**dadurch gekennzeichnet,**
- **dass** der Hülsenkörper (21) einen radial abstehenden Kragenabschnitt (40) aufweist, der axial an einer die Öffnung (24) berandenden Einfassung (41) abgestützt ist,
- **dass** der Kernkörper (22) in der Einsteckrichtung des Hülsenkörpers (21) axial in den Hülsenkörper (21) eingedrückt oder eingeschlagen ist, um die radiale Verspannung zu erzeugen.

11. Ladeeinrichtung nach einem der Ansprüche 1 bis 10,
**dadurch gekennzeichnet,**
- **dass** der Hülsenkörper (21) einen Anschlagabschnitt (37) aufweist, der im montierten Zustand aus der Öffnung (24) herausragt und die Anschlagfläche (23) aufweist,
- wobei insbesondere vorgesehen sein kann, dass die Anschlagfläche (23) durch eine ringförmige axiale Stirnseite des Anschlagabschnitts (37) oder durch ein geschlossenes axiales Ende des Anschlagabschnitts (37) oder durch eine radiale Umfangsseite des, insbesondere exzentrisch ausgestalteten, Anschlagabschnitts (37) gebildet ist.

12. Ladeeinrichtung nach einem der Ansprüche 1 bis 10,
**dadurch gekennzeichnet,**
- **dass** die Anschlagfläche (23) an einem Anschlagkörper (32) ausgebildet ist, der am Hülsenkörper (21) angeordnet ist, vorzugsweise an einem aus der Öffnung (24) herausstehenden Anschlagabschnitt (37) des Hülsenkörpers (21), oder
- **dass** die Anschlagfläche (23) an einem aus der Öffnung (24) herausstehenden Anschlagabschnitt (39) des Kernkörpers (22) ausgebildet ist.

13. Ladeeinrichtung nach einem der Ansprüche 1 bis 12,
**dadurch gekennzeichnet,**
**dass** das mobile Bauteil (10) ein Stellglied (3) einer variablen Turbinengeometrie (4) ist, wobei insbesondere vorgesehen sein kann, dass das stationäre Bauteil (11) ein Turbinengehäuse (2) oder eine am Turbinengehäuse (2) angeordnete Konsole ist.

14. Ladeeinrichtung nach einem der Ansprüche 1 bis 12,
**dadurch gekennzeichnet,**
**dass** das mobile Bauteil (10) ein Betätigungsring (12) einer variablen Turbinengeometrie (4) ist, mit dem Betätigungsarme (13) von verstellbaren Leitschaufeln (16) der variablen Turbinengeometrie (4) gemeinsam verdrehbar sind, wobei insbesondere vorgesehen sein kann, dass das stationäre Bauteil (11) ein Leitschaufelträger (17) der variablen Turbinengeometrie (4) ist, an dem die verstellbaren Leitschaufeln (16) drehbar sind.

## Claims

1. Charging device, in particular an exhaust gas turbocharger, having at least one stop device (9) for limiting an adjustment path (7) of a mobile component (10) of the charging device (1) relative to a stationary component (11) of the charging device (1), the stop device (9) comprising a stop face (23) which, in the mounted state, protrudes into the adjustment path (7) of the mobile component (10) and which delimits the adjustment path (7) of the mobile component (10), **characterised in that**
- the stop device (9) comprises a sleeve body (21) which is insertable into an opening (24) formed in the stationary component (11), such that a retaining portion (25) of the sleeve body (21) is arranged in the interior of the opening (24),
- the stop device (9) comprises a core body (22) which is arranged in the interior (26) of the sleeve body (21) and, in the mounted state, radially braces the retaining portion (25) against an inner wall (28) of the stationary component (11), which inner wall radially delimits the opening (24), and thereby axially and/or non-rotatably fixes the sleeve body (21) on the stationary component (11).

2. Charging device according to claim 1, **characterised in that**, in the mounted state, the core body (22) is axially and/or non-rotatably fixed in the sleeve body (21) via the radial bracing against said sleeve body.

3. Charging device according to either claim 1 or claim 2, **characterised in that** the stop face (23) is formed on the sleeve body (21) or on the core body (22), or on a stop body (32) which is arranged on the sleeve body (21) or on the core body (22).

4. Charging device according to any of claims 1 to 3, **characterised in that** the sleeve body (21) in the retaining portion (25) comprises an internal cone (29) which interacts with an outer cone (30) of the core body (22) for the radial bracing.

5. Charging device according to any of claims 1 to 3, **characterised in that** the sleeve body (21) in the retaining portion (25) comprises an axially tapering internal cross section, for example an internal cone (29), whilst the core body (22) comprises an external cross section which is convexly curved thereto, for example in a ball or spherical shape, it being possible in particular to provide for the core body (22) to be configured as a sphere.

6. Charging device according to any of claims 1 to 5, **characterised in that** the sleeve body (21) in the retaining portion (25) comprises at least one radially projecting protrusion (31) or a friction-enhancing layer (31) arranged on the outside of the sleeve body, it being possible in particular to provide that the respective protrusion (31) is configured to extend annularly or in a straight line and/or axially, it being possible in particular to provide that a plurality of protrusions (31) are arranged axially and/or adjacently in the circumferential direction, it being possible in particular to provide that the friction-enhancing layer (31) is a chemical nickel matrix with silicon carbide particles embedded therein.

7. Charging device according to any of claims 1 to 6, **characterised in that** the core body (22) comprises a pull rod (33) at least for assembly, which pull rod protrudes from the opening (24) during assembly, such that when the sleeve body (21) is positioned axially and/or with respect to the rotational position thereof, axial tensile forces can be introduced into the core body (22) via the pull rod (33) for producing the radial bracing.

8. Charging device according to any of claims 1 to 6, **characterised in that** the sleeve body (21) comprises a tensile sleeve portion (35) at least for assembly, which tensile sleeve portion protrudes from the opening (24) during assembly, such that when the sleeve body (21) is positioned axially and/or with respect to the rotational position thereof, axial tensile forces can be introduced into the sleeve body (21) via the tensile sleeve portion (35) in order to be able to apply axial pressure forces to the core body (22) via the tensile sleeve portion (35) for producing the radial bracing.

9. Charging device according to either claim 7 or claim 8, **characterised in that** the pull rod (33) is mounted on the core body (22) such that it detaches due to the axial tensile forces as soon as the desired radial bracing is achieved, or **in that** the tensile sleeve portion (35) is mounted on the sleeve body (21) such that it detaches due to the axial tensile forces as soon as the desired radial bracing is achieved.

10. Charging device according to any of claims 1 to 6, **characterised in that** the sleeve body (21) comprises a radially projecting collar portion (40), which is axially supported against an enclosure (41) bordering the opening (24), **in that** the core body (22) is axially pressed or driven into the sleeve body (21) in the insertion direction of the sleeve body (21) in order to produce the radial bracing.

11. Charging device according any of claims 1 to 10, **characterised in that** the sleeve body (21) comprises a stop portion (37) which, in the assembled state, protrudes from the opening (24) and comprises the stop face (23), it being possible in particular to provide that the stop face (23) is formed by an annular axial end face of the stop portion (37), or by a closed axial end of the stop portion (37), or by a radial circumferential side of the stop portion (37) which in particular is configured to be eccentric.

12. Charging device according to any of claims 1 to 10, **characterised in that** the stop face (23) is formed on a stop body (32) arranged on the sleeve body (21), preferably on a stop portion (37) of the sleeve body (21) protruding from the opening (24), or **in that** the stop face (23) is formed on a stop portion (39) of the core body (22) protruding from the opening (24).

13. Charging device according to any of claims 1 to 12, **characterised in that** the mobile component (10) is an actuator (3) of a variable turbine geometry (4), it being possible in particular to provide that the stationary component (11) is a turbine housing (2) or a console arranged on the turbine housing (2).

14. Charging device according to any of claims 1 to 12, **characterised in that** the mobile component (10) is an actuating ring (12) of a variable turbine geometry (4), with which actuating arms (13) of adjustable guide vanes (16) of the variable turbine geometry (4) can be jointly rotated, it being possible in particular to provide that the stationary component (11) is a guide vane carrier (17) of the variable turbine geometry (4), on which guide vane carrier the adjustable guide vanes (16) can be rotated.

## Revendications

1. Dispositif de chargement, en particulier turbocompresseur à gaz d'échappement, comprenant au moins un dispositif de butée (9) pour délimiter un trajet de déplacement (7) d'une pièce mobile (10) du dispositif de chargement (1) par rapport à une pièce fixe (11) du dispositif de chargement (1), dans lequel le dispositif de butée présente une surface de butée saillant à l'état monté dans le trajet de déplacement (7) de la pièce mobile (10), laquelle surface délimite le trajet de déplacement (7) de la pièce mobile (10),
**caractérisé en ce que** :
- le dispositif de butée (9) présente un corps de douille (21), qui peut être enfiché dans une ouverture (24) formée dans la pièce fixe (11) de sorte qu'une section de retenue (25) du corps de douille (21) soit aménagée à l'intérieur de l'ouverture (24),
- le dispositif de butée (9) présente un corps central (22), qui est aménagé à l'intérieur (26) du corps de douille (21) et soutient radialement à l'état monté la section de retenue (25) par une paroi interne (28) de la pièce fixe (11) délimitant radialement l'ouverture (24) et, de la sorte, fixe axialement et/ou de manière solidaire en rotation le corps de douille (21) sur la pièce fixe (11).

2. Dispositif de chargement selon la revendication 1,
**caractérisé en ce que** :
le corps central (22) est fixé à l'état monté par le soutien radial avec le corps de douille (21) axialement et/ou de manière solidaire en rotation dans celui-ci.

3. Dispositif de chargement selon la revendication 1 ou la revendication 2,
**caractérisé en ce que** :
la surface de butée (23) est formée sur le corps de douille (21) ou sur le corps central (22) ou encore sur un corps de butée (32) qui est aménagé sur le corps de douille (21) ou sur le corps central (22).

4. Dispositif de chargement selon l'une quelconque des revendications 1 à 3,
**caractérisé en ce que** :
le corps de douille (21) présente dans la section de retenue (25) un cône interne (29), qui coopère avec un cône externe (30) du corps central (22) pour le soutenir radialement.

5. Dispositif de chargement selon l'une quelconque des revendications 1 à 3,
**caractérisé en ce que** :
- le corps de douille (21) présente dans la section de retenue (25) une section transversale interne s'amincissant axialement, par exemple un cône interne (29), tandis que le corps central (22) présente une section externe bombée de manière convexe par rapport à celui-ci, par exemple en forme sphéroïde ou sphérique,
- dans lequel il peut être prévu en particulier que le corps central (22) soit conformé en bille.

6. Dispositif de chargement selon l'une quelconque des revendications 1 à 5,
**caractérisé en ce que** :
- le corps de douille (21) présente dans la section de retenue (25) sur son côté externe au moins une saillie (31) ressortant radialement ou une couche (31) renforçant la capacité de frottement,
- dans lequel il peut être prévu en particulier que la saillie respective (31) présente une forme annulaire en périphérie ou s'étende en ligne droite et/ou axialement,
- dans lequel il peut être prévu en particulier que plusieurs saillies (31) soient aménagées à proximité axialement et/ou dans la direction périphérique,
- dans lequel il peut être prévu en particulier que la couche (31) renforçant la capacité de frottement soit une matrice chimique de nickel avec des particules de carbure de silicium qui y sont dispersées.

7. Dispositif de chargement selon l'une quelconque des revendications 1 à 6,
**caractérisé en ce que** :
le corps central (22) présente au moins pour le montage une tige de traction (33) qui, lors du montage, ressort de l'ouverture (24) de sorte que, lorsque le corps de douille (21) est positionné axialement et/ou par rapport à sa position de rotation sur la tige de traction (33), des forces de traction axiales puissent être induites dans le corps central (22) pour assurer le soutien radial.

8. Dispositif de chargement selon l'une quelconque des revendications 1 à 6,
**caractérisé en ce que** :
le corps de douille (21) présente au moins pour le montage une section de douille de traction (35), qui, lors du montage, ressort de l'ouverture (24) de sorte que, lorsque le corps de douille (21) est positionné axialement et/ou par rapport à sa position de rotation sur la section de douille de traction (35) des forces de traction axiales puissent être induites dans le corps de douille (21) pour pouvoir, lors de la production du soutien radial par la section de douille de traction (35), induire des forces de pression axiales sur le corps central (22).

9. Dispositif de chargement selon la revendication 7 ou la revendication 8,
**caractérisé en ce que** :
- la tige de traction (33) est montée sur le corps central (22) de sorte qu'elle se rompe en raison des forces de traction axiales aussitôt que le soutien radial souhaité est atteint ou
- la section de douille de traction (35) est montée sur le corps de douille (21) de sorte qu'elle se rompe en raison des forces de traction axiales aussitôt que le soutien radial souhaité est atteint.

10. Dispositif de chargement selon l'une quelconque des revendications 1 à 6,
**caractérisé en ce que** :
- le corps de douille (21) présente une section de rebord (40) ressortant radialement qui s'appuie axialement sur un bord (41) enserrant l'ouverture (24), et
- le corps central (22) est pressé ou enfoncé dans la direction d'enfichage du corps de douille (21) axialement dans le corps de douille (21) pour assurer le soutien radial.

11. Dispositif de chargement selon l'une quelconque des revendications 1 à 10,
**caractérisé en ce que** :
- le corps de douille (21) présente une section de butée (37) qui, à l'état monté, ressort de l'ouverture (24) et présente la surface de butée (23),
- dans lequel il peut être prévu en particulier que la surface de butée (23) soit formée par une face annulaire axiale de la section de butée (37) ou par une extrémité axiale fermée de la section de butée (37) ou par une face périphérique radiale de la section de butée (37), en particulier de conformation excentrique.

12. Dispositif de chargement selon l'une quelconque des revendications 1 à 10,
**caractérisé en ce que** :
- la surface de butée (23) est formée sur un corps de butée (32), qui est aménagé sur le corps de douille (21), de préférence sur une section de butée (37) du corps de douille (21) faisant saillie de l'ouverture (24) ou
- la surface de butée (23) est formée sur une section de butée (39) du corps central (22) faisant saillie de l'ouverture (24).

13. Dispositif de chargement selon l'une quelconque des revendications 1 à 12,
**caractérisé en ce que** :
la pièce mobile (10) est un élément de réglage (3) d'une géométrie de turbine variable (4), dans lequel il peut être prévu en particulier que la pièce fixe (11) soit un logement de turbine (2) ou une console aménagée sur le logement de turbine (2).

14. Dispositif de chargement selon l'une quelconque des revendications 1 à 12,
**caractérisé en ce que** :
la pièce mobile (10) est un anneau de commande (12) d'une géométrie de turbine variable (4), avec lequel des bras de commande (13) peuvent être soumis à une rotation conjointe par des aubes directrices réglables (16), dans lequel il peut être prévu en particulier que la pièce fixe (11) soit un support d'aubes directrices (17) de la géométrie de turbine variable (4), sur lequel les aubes directrices réglable (16) peuvent tourner.
